# EUROPEAN PATENT APPLICATION

(11) **EP 1 890 386 A1**
(43) Date of publication of application: **20.02.2008**
(21) Application number: 06291320.7
(22) Date of filing: 16.08.2006
(51) Int. Cl.: H04B 1/04

(54) **Digital front-end for multi-standard transmitter and multi-standard base station**

(71) Applicant: Alcatel Lucent, 75008 Paris (FR)
(72) Inventor: Pascht, Andreas, 73614 Schorndorf (DE); Strauss, Jens, 75382 Althengstett (DE)
(74) Representative: Kohler Schmid Möbus

(57) **Abstract**

A digital front-end (4.1) for a multi-standard transmitter (1). The proposed digital front-end comprises:
- a dedicated block (4.1a) with a plurality of digital signal-processing/adaptation modules (4.111-4.143) for processing digital signals in connection with a plurality of communication standards;
- a common block (1.4b) located behind said dedicated block (4.1a), said common block (4.1b) comprising a number of digital signal-processing modules (4.151-4.172) common for all of said plurality of communication standards; and
- a switchable connecting means (4.1c) for transferring at least one of the signals output from said dedicated block (4.1 a) to the common block (4.1b).

## Description

### Background of the invention

The present invention relates to a digital front-end for a multi-standard transmitter, to a multi-standard transmitter module, and to a base station for a multi-standard communication network comprising said multi-standard transmitter module and/or said digital front-end.

In current communication networks, in particular in the domain of wireless telecommunications, there is a trend toward increased data rates to enable new types of services. A common way of achieving this goal consists in defining new air-interfaces. An example of such a new air-interface is the WiMAX (Worldwide Interoperability for Microwave Access) standard, which provides fast Internet access via a fixed wireless link. Other communication standards with corresponding air-interfaces include the GSM (Global System for Mobile Communications) standard, the UMTS (Universal Mobile Telecommunications System) standard, and the 3G LTE (3^{rd} Generation Long-Term Evolution) standard, as known to a person skilled in the art. Said standards differ from each other in terms of used frequencies, modulation schemes, transmit power, etc.

In order to able to react quickly to the requirements in connection with new air-interfaces, a multi-standard digital transmitter front-end should be employed within a multi-standard base station of the communication network. Known multi-standard transmitters for multi-standard base stations use separate hardware for supporting a plurality of different communication standards. This leads to reduced flexibility in operation and increased cost expenditure.

### Object of the invention

It is the object of the present invention to provide a digital front-end for the support of different communication standards with increased operational flexibility and reduced cost expenditure. It is also an object of the present invention to provide an improved multi-standard transmitter module and an improved base station for use in a multi-standard communication network.

### Summary of the invention

According to a first aspect of the present invention the object is achieved by providing a digital front-end for a multi-standard transmitter, comprising:
- a dedicated block with a plurality of digital signal-processing/adaptation modules for processing digital signals in connection with a plurality of communication standards;
- a common block located behind said dedicated block, said common block comprising a number of digital signal-processing modules common for all of said plurality of communication standards; and
- a switchable connecting means for transferring at least one of the signals output from said dedicated block to the common block.

According to a second aspect of the present invention, the object is achieved by providing a multi-standard transmitter module comprising:
- a digital front-end for receiving and processing digital signals, in particular digital base-band signals;
- an analog-to-digital converter connected with the digital front-end for converting said digitals signals to corresponding analog signals;
- an analog front-end connected with the analog-to-digital converter for processing said analog signals;
- a power amplifier connected with the analog front-end for amplifying said processed analog signals;
- an antenna-coupling equipment connected with the power amplifier; and
- an antenna for transmitting said amplified analog signals;
wherein said digital front-end is devised according to said first aspect of the present invention.

According to a third aspect of the present invention the object is achieved by providing a base station for a multi-standard communication network, said base station comprising at least one multi-standard transmitter module according to said second aspect of the present invention.

According to a fourth aspect of the present invention the object is achieved by providing a base station for a multi-standard communication network, said base station comprising at least one digital front-end according to said first aspect of the present invention.

In this way, according to a basic idea underlying the present invention, the proposed digital front-end comprises a dedicated part (dedicated block) and a common part (common block), wherein the former includes data-processing/adaptation modules dedicated to processing signals in connection with a respective communication standard, while the latter comprises common signal-processing/adaptation modules which can be used in connection with each one of the supported communication standards, i.e., which are common for all of the supported communication standards. Operating said digital front-end in accordance with a given communication standard thus can easily be commanded by simply setting said switchable connecting means accordingly.

Flexibility of a multi-standard base station employing the digital front-end and/or the multi-standard transmitter module in accordance with the present invention is increased by supporting several communication standards simultaneously. To this end, in accordance with a further embodiment of the digital front-end in accordance with the present invention digital signal-processing/adaptation modules dedicated to respective communication standards are arranged on parallel signal-processing paths, thus enabling simultaneously processing of digital signals in connection with a plurality of communication standards.

The data-processing/adaptation modules comprised within the dedicated part perform dedicated signal-processing/adaptation in connection with respective communication standards. At the output of the dedicated part, signals of different communication standards may be re-sampled to a common sampling rate and combined. Therefore, in a further embodiment of the digital front-end in accordance with the present invention, the latter comprises means for re-sampling and/or combining a number of said parallel signal-processing paths within the dedicated block.

The signal-processing/adaptation modules of the common part, which may comprise frequency converters and compensation algorithms requiring feedback information, are only implemented once and are used for the combined multi-standard signal or any other output signal of said dedicated part. To this end, in a further embodiment of the digital front-end in accordance with the present invention, the common block comprises a main signal-processing path and a number of signal adaptation and/or feedback paths, the latter at least partly being arranged in parallel with said main signal-processing path.

In yet another embodiment of the digital front-end in accordance with the present invention, said dedicated part comprises at least one of an up-sampling module, a fractional up-sampling module, a multi-carrier synthesis module, a power-adaptation module, a modulating module, and a combining module.

In another embodiment of the digital front-end in accordance with the present invention, said common part comprises at least one of an up-sampling module, a digital pre-distortion module, a digital intermediate frequency module, a delay-compensating module, an IQ imbalance/DC offset compensating module, and a demodulating module.

For controlling operation of said switchable connecting means, an embodiment of the multi-standard transmitter module in accordance with the present invention further comprises a control unit.

In this way, the present invention achieves harmonisation of different sampling rates in connection with various communication standards as well as harmonisation of the positioning of digital optimisation algorithms in different signal paths of a digital front-end for multi-standard transmitter modules and base stations.

Further advantages and characteristics of the present invention can be gathered from the following description of preferred embodiments given by way of example only with reference to the enclosed drawings. Features mentioned above as well as below can be used in accordance with the present invention either individually or in conjunction. The described embodiments are not to be regarded as an exhaustive enumeration but rather as examples of a general concept underlying the present invention.

### Brief description of the drawings

- Fig. 1: is a block diagram of an embodiment of the transmitter module in accordance with the present invention;
- Fig. 2: is a block diagram of a first embodiment of the digital transmitter frontend in accordance with the present invention; and
- Fig. 3: is a block diagram of another embodiment of the digital transmitter front-end in accordance with the present invention.

### Detailed description

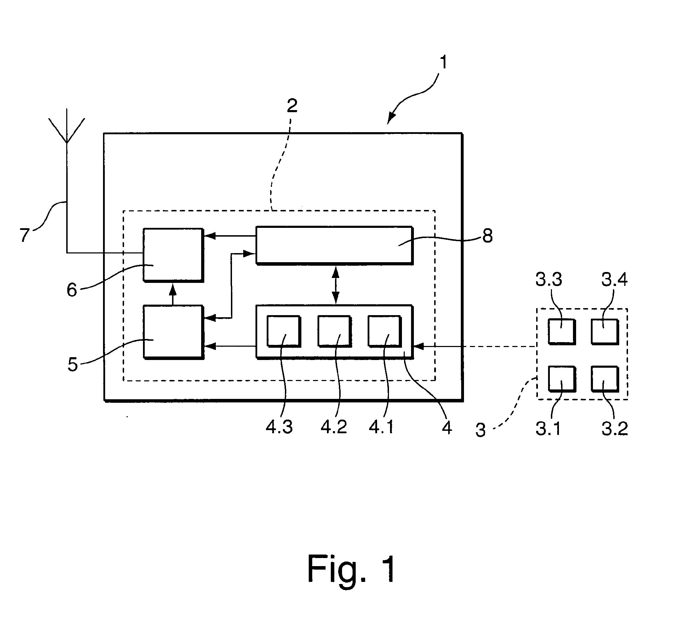

**Fig. 1** shows a block diagram of a multi-standard transmitter module **1** in accordance with an embodiment of the present invention. As will be appreciated by a person skilled in the art, the multi-standard transmitter module 1 may advantageously be employed in a base station for a multi-standard telecommunications network (not shown).

As can be gathered from Fig. **1,** transmitter module or transmitter 1 comprises a multi-standard/multi-band front-end (MBFE) **2** (dashed box) connected with base-band processing means **3** for receiving digital base-band signals **BBS.** In the present example, base-band processing means 3 support a number of different communication standards, i.e., base-band processing means 3 comprises first means **3.1** for UMTS base-band processing, second means **3.2** for 3G LTE base-band processing, third means **3.3** in the form of a GSM interface, and fourth means **3.4** for WiMAX base-band processing.

Within MBFE 2 the transmitter module 1 comprises a transmitter front-end **4,** a power amplifier **5,** an antenna-coupling equipment (ACE) **6,** an antenna **7,** and a control unit **8** for controlling at least ACE 6, power amplifier 5, and transmitter front-end 4.

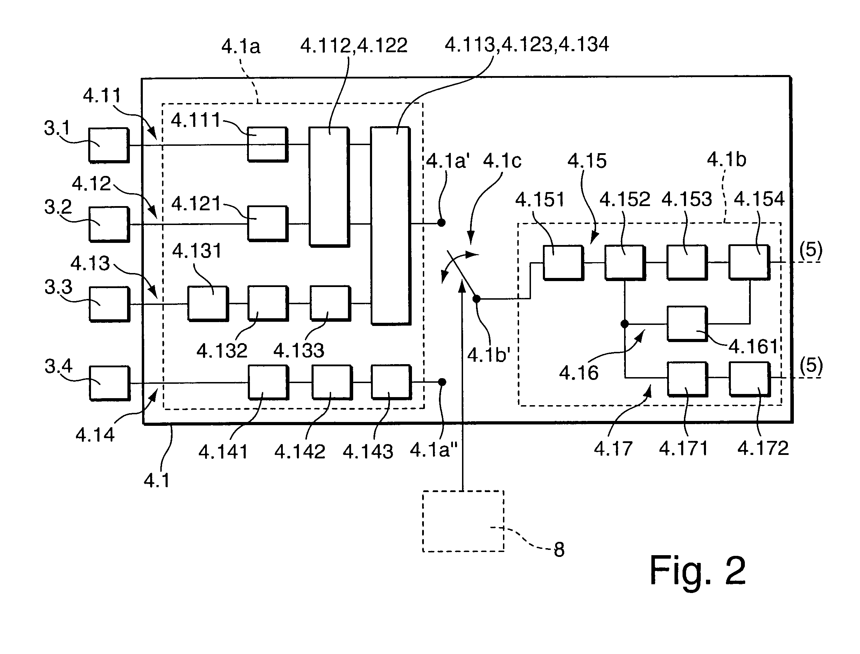

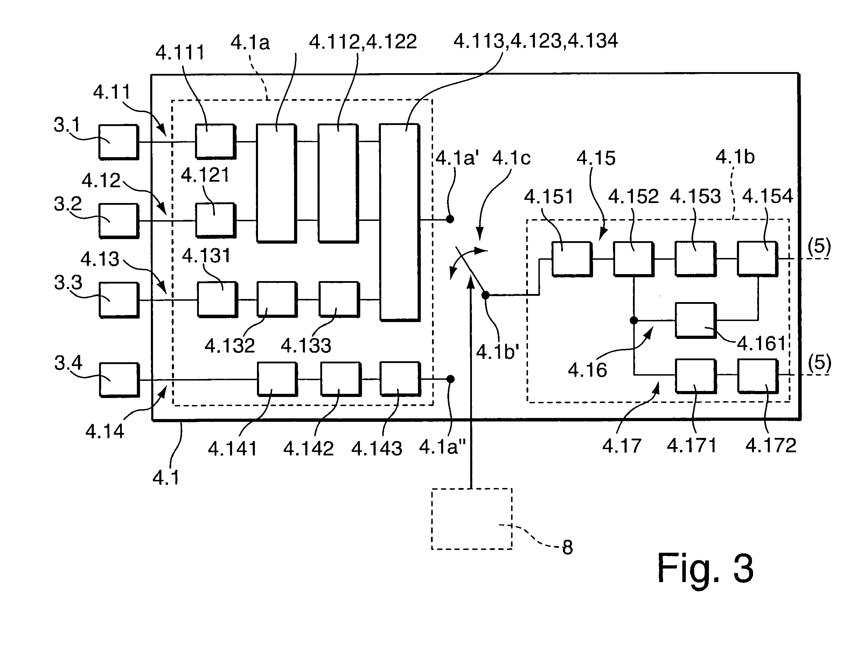

Within transmitter front-end 4, the transmitter module 1 of Fig. 1 comprises a digital front-end **4.1** followed by a digital-to-analog converter **4.2** and by an analog front-end **4.3.** Design and configuration of the digital front-end 4.1 in accordance with embodiments of the present invention will now be described with reference to appended Figs. 2 and 3.

**Fig. 2** shows a block diagram of a first embodiment of the digital transmitter front-end in accordance with the present invention. The same reference numerals as in Fig. 1 have been used in Fig. 2 to designate the same or similar elements.

As can be gathered from Fig. 2, the digital front-end 4.1 generally comprises two distinct parts or blocks **4.1** a, **4.1** b which are switchably interconnected by means of switchable connecting means **4.1c.** In the following, said part or block 4.1a of digital front-end 4.1 will be referred to as dedicated block 4.1 a, whereas said second part of block 4.1b of digital front-end 4.1 will be referred to as common block 4.1 b.

Dedicated block 4.1 a comprises a plurality of digital signal processing and adaptation modules which are required for processing and adapting digital base-band signals in connection with different communication standards. In the embodiment shown, said dedicated block 4.1 a comprises a first signal-processing path **4.11** in connection with said UMTS base-band processing means 3.1 (Fig. 1). Said first signal-processing path comprises an up-sampling module **4.111** followed by a multi-carrier synthesis module **4.112** and a combining/clipping module **4.113,** wherein module 4.113 comprises means for performing a Peak-to-Average Power Ratio (PAPR) reduction, as known to a person skilled in the art. In this way, modules 4.111-4.113 arranged on said first signal-processing path 4.11 perform digital signal-processing and adaptation steps dedicated to processing/adapting UMTS base-band signals. An output signal of said first signal-processing path 4.11 is provided at a first dedicated block output terminal **4.1a'.**

Dedicated block 4.1 a further comprises a second signal-processing path **4.12** including up-sampling module **4.121,** multi-carrier synthesis module **4.122,** and combining/clipping module **4.123.** In the present embodiment, said multi-carrier synthesis module 4.122 and said combining/clipping module 4.123 are identical with previously described modules 4.112 and 4.113 included in said first signal-processing path 4.11, i.e., reference numerals 4.112 and 4.122 as well as reference numerals 4.113 and 4.123, respectively, denote the same element of digital front-end 4.1. An output signal of said second signal-processing path 4.12 is provided to said first dedicated block output terminal 4.1 a'.

Furthermore, dedicated block 4.1a comprises a third signal-processing path **4.13** including modulation module **4.131,** multi-carrier synthesis module **4.132,** fractional up-sampling module **4.133,** and combining/clipping module **4.134.** Again, combining/clipping 4.134 is identical with previously described modules 4.113 and 4.123, i.e., reference numerals 4.113, 4.123, and 4.134 refer to a single element. An output signal of said third signal-processing path 4.13 is provided to said first dedicated block output terminal 4.1 a'.

Finally, dedicated block **4.1 a** of Fig. 1 comprises a fourth signal-processing path **4.14** including up-sampling module **4.141,** fractional up-sampling module **4.142,** and PAPR reduction/clipping module **4.143.** An output signal of said fourth signal-processing path 4.14 is provided to a second dedicated block output terminal **4.1a".**

As already stated above, said first signal-processing path 4.11 is operatively connected with UMTS base-band processing means 3.1. Furthermore, said second signal-processing path 4.12 is operatively connected with 3G LTE base-band processing means 3.2, while said third signal-processing path 4.13 is connected with GSM interface 3.3, and said fourth signal-processing path 4.14 is connected with WiMAX base-band processing means 3.4 (cf. Fig. 1). The corresponding processing modules on each path are devised accordingly.

In this way, each of said first through fourth signal-processing paths 4.11-4.14 provides dedicated digital signal-processing/adaptation modules in connection with a plurality of communication standards, which are thus supported in parallel or simultaneously. Respective output signals of said first through fourth signal-processing paths are delivered either at said first output terminal 4.1a' or at said second output terminal 4.1 a" of dedicated block 4.1 a.

As can further be gathered from Fig. 1, the digital front-end 4.1 in accordance with an embodiment of the present invention further comprises, in said common block 4.1 b, a main signal-processing path **4.15** and a number of signal-adaptation and/or feedback paths **4.16, 4.17,** which are arranged in parallel with said main signal-processing path 4.15.

In said main signal-processing path 4.15, common block 4.1 b comprises up-sampling module **4.151** followed by digital pre-distortion module **4.152,** digital IF (Intermediate Frequency) module **4.153,** and IQ imbalance/DC offset compensating module **4.154,** a respective function of which is assumed to be known to a person skilled in the art and will not be explained in detail in the present document. Behind common block 4.1 b, said main signal processing path 4.15 is connected with power amplifier 5 (cf. Fig. 1).

In said feedback path 4.16, common block 4.1b comprises a further digital IF module **4.161.** In said other parallel path 4.17, common block 4.1 b comprises delay-compensating means **4.171** and demodulating means **4.172,** a function of which is also assumed to be known to a person skilled in the art. Said path 4.17 is further connected with an output of power amplifier 5 (not shown).

In a general way, the modules comprised in common block 4.1b constitute frequency converting means and/or adaptive signal-processing means which require feedback information, e.g. via said paths 4.16, 4.17. In contrast to the multiple and parallel path design of dedicated block 4.1 a, said modules of common block 4.1 b are implemented only once and are used for all of said multi-standard signals.

To achieve this, dedicated block 4.1 a and common block 4.1 b are switchably interconnected by means of switchable connecting means 4.1 c. In the embodiment of Fig. 1, switchable connecting means 4.1c is permanently connected with an input terminal **4.1b'** of common block 4.1b and can be switched for connecting said input terminal 4.1 b' with either one of said first and second output terminals 4.1 a', 4.1 a" of dedicated block 4.1 a.

In this way, by switching said switchable connecting means 4.1 c to said first dedicated block output terminal 4.1a', an operation mode is selected wherein UMTS, 3G LTE, and GSM standards are supported in parallel. Alternatively, by switching said switchable connecting means 4.1 c to said second dedicated block output terminal 4.1 a", the input terminal of common block 4.1 b can be switched to the WiMAX standard.

As further indicated in Fig. 2, operation of switchable connecting means 4.1c is controlled by means of control unit 8 (cf. Fig. 1). Alternatively or additionally, operation of said switchable connecting means 4.1 c can be controlled (manually) by an operator for selecting a current communication standard or a plurality of simultaneously supported communication standards.

As will be appreciated by a person skilled in the art, the architecture of digital transmitter front-end 4.1 as depicted and described with reference to appended Fig. 2 is not to be understood as a fixed solution. For instance, the order of individual building blocks (modules) can be changed if required. In particular, location of PAPR reduction module 4.113, 4.123, 4.134 in Fig. 2 may be a subject to change depending on a desired mix of communication standards.

**Fig. 3** shows a block diagram of another embodiment of the digital transmitter front-end 4.1 in accordance with the present invention. As will be appreciated by a person skilled in the art, the embodiment of Fig. 2 provides an alternative location of said PAPR reduction module to avoid distortions within the GSM RF (Radio Frequency) carriers.

In the following, only the differences between the embodiment of Fig. 3 and previously described embodiment of Fig. 2 will be described in detail. The same reference numerals as in Fig. 2 have been used in Fig. 3 to denote the same or similar elements.

According to the embodiment of Fig. 3, said first and second signal-processing paths 4.11, 4.12 now comprise a common dedicated PAPR reduction/clipping module **4.113', 4123'** located in front of combining module 4.113, 4.123, the latter being shared between said first and second signal-processing paths 4.11, 4.12 and said third signal-processing path 4.13, as previously described with reference to appended Fig. 2. Since said combining module of Fig. 3 does not perform any PAPR reduction/clipping, no such signal-processing step is performed with respect to GSM base-band signals, thus avoiding distortions within the GSM RF carriers.

The fourth signal-processing path 4.14 for transmitting digital signals in connection with the WiMAX standard remains unchanged with respect to the previously described embodiment of Fig. 2.

In this way, embodiments of the present invention provide a fundamental setup for simultaneous operation of different communication standards. A base station equipped with a transmitter or transmitter module comprising the above-described digital front-end shows large flexibility for known and future air-interfaces in connection with various communication standards. Thus, no costly hardware re-design will be required for adopting future air-interfaces. Furthermore, the use of a single digital front-end for all air-interfaces entails significantly reduced cost expenditure.

## Claims

1. A digital front-end (4.1) for a multi-standard transmitter (1), comprising:
- a dedicated block (4.1 a) with a plurality of digital signal-processing/adaptation modules (4.111-4.143) for processing digital signals in connection with a plurality of communication standards;
- a common block (4.1b) located behind said dedicated block (4.1 a), said common block (4.1 b) comprising a number of digital signal-processing modules (4.151-4.172) common for all of said plurality of communication standards; and
- a switchable connecting means (4.1c) for transferring at least one of the signals output from said dedicated block (4.1 a) to the common block (4.1 b).

2. The digital front-end of claim 1, **characterised in that** digital signal-processing/adaptation modules (4.111-4.143) dedicated to respective communication standards are arranged on parallel signal-processing paths (4.11-4.14).

3. The digital front-end of claim 2, **characterised by** means (4.113, 4.123, 4.134) for combining a number of said parallel signal-processing paths (4.11, 4.12, 4.13) within the dedicated block (4.1 a).

4. The digital front-end of claim 1, **characterised in that** the common block (4.1b) comprises a main signal-processing path (4.15) and a number of signal adaptation and/or feedback paths (4.16, 4.17) at least partly arranged in parallel with said main signal-processing path (4.15).

5. The digital front-end of claim 1, **characterised in that** said dedicated block (4.1 a) comprises at least one of an up-sampling module (4.111, 4.121, 4.141), a fractional up-sampling module (4.133, 4.142), a multi-carrier synthesis module (4.112, 4.122, 4.132), a power-adaptation module (4.113, 4.123, 4.134, 4.143; 4.113', 4.123'), a modulating module (4.131), and a combining module (4.113, 4.123, 4.134).

6. The digital front-end of claim 1, **characterised in that** said common block (4.1b) comprises at least one of an up-sampling module (4.151), a digital pre-distortion module (4.152), a digital intermediate frequency module (4.153, 4.161), a delay-compensating module (4.171), an IQ imbalance/DC offset-compensating module (4.154), and a demodulating module (4.172).

7. Multi-standard transmitter module (1), comprising:
- a digital front-end (4.1) for receiving and processing digital signals (BBS), in particular digital base-band signals;
- an analog-to-digital converter (4.2) connected with the digital front-end (4.1) for converting said digitals signals to corresponding analog signals;
- an analog front-end (4.3) connected with the analog-to-digital converter (4.2) for processing said analog signals;
- a power amplifier (5) connected with the analog front-end (4.3) for amplifying said processed analog signals;
- an antenna-coupling equipment (6) connected with the power amplifier; and
- an antenna (7) for transmitting said amplified analog signals;
**characterised in that** said digital front-end (4.1) is devised according to any one of claims 1 to 6.

8. The multi-standard transmitter module (1) of claim 7, **characterised by** a control unit (8) for controlling operation of said switchable connecting means (4.1c).

9. A base station for a multi-standard communication network, **characterised in that** said base station comprises at least one multi-standard transmitter module (1) according to claim 7.

10. A base station for a multi-standard communication network, **characterised in that** said base station comprises at least one digital front-end according to any one of claims 1 to 6.
